Europäisches Patentamt

(19) European Patent Office

Office européen des brevets

(11) Veröffentlichungsnummer: **0 054 334**
**A1**

(12) # EUROPÄISCHE PATENTANMELDUNG

(21) Anmeldenummer: 81201360.5

(22) Anmeldetag: 12.12.81

(51) Int. Cl.³: **B 29 J 5/00**
**B 28 B 5/02**

(30) Priorität: 16.12.80 NL 8006803

(43) Veröffentlichungstag der Anmeldung:
23.06.82 Patentblatt 82/25

(84) Benannte Vertragsstaaten:
BE DE FR LU NL SE

(71) Anmelder: MOBAN B.V.
Kleine Straat 2B
NL-6369 PA Simpelveld(NL)

(72) Erfinder: Aalbers, Johannes Gerhardus
Burg. Kehrerstraat 34
NL-7002 LD Doetinchem(NL)

(72) Erfinder: van den Berg, Johannes
Kampstraat 27
NL-6171 JN Stein(NL)

(74) Vertreter: Van de Panne, Vitus Nicolaas et al,
Octrooibureau DSM Postbus 9
NL-6160 MA Geleen(NL)

(54) **Verfahren und Vorrichtung zum Herstellen von Flachplatten.**

(57) Die Erfindung betrifft ein Verfahren und Vorrichtung zum Herstellen flacher Platten aus härtbarem Material, indem es mit Hilfe einer Dosiervorrichtung (1), die aus zwei Seitenwänden (2, 3), einer Rückwand (4), einer Frontwand (5) und etwaigenfalls einer Bodenplatte (6), besteht, die einen Dosierschlitz (7) frei lassen, in Form einer kontinuierlichen Schicht (11) auf einen Träger (8) aufgebracht wird, welche Schicht (11) verdichtet und ausgehärtet wird. Das härtbare Material besteht aus anorganischem, harzgebundenem Füllstoff. Die Frontwand (5), die der auf den Träger (8) aufgebrachten Schicht (11) am nächsten ist, bewegt auf und ab, wonach die Schicht (11) auf dem Träger (8) durch einen sich auf und ab bewegenden Stempel (12) verdichtet und egalisiert wird.

Die sich auf und ab bewegende Frontwand (5) zum Verdichten der gebildeten Schicht (11) ist mit dem Stempel (12) mit einer Stempelfläche (13) verbunden, die senkrecht zu dieser Wand (5) in Richtung der und parallel zu der sich fortbewegenden Schicht (11) angebracht is.

EP 0 054 334 A1

MOBAN B.V.

0054334

ED 3251

-1-

## VERFAHREN UND VORRICHTUNG ZUM HERSTELLEN VON FLACHPLATTEN

Die Erfindung bezieht sich auf ein Verfahren zum Herstellen von Flachplatten aus härtbarem Material, indem es mit Hilfe einer Dosiervorrichtung, bestehend aus zwei Seitenwänden, eine Rück- und einer Frontwand und etwaigenfalls einer Bodenplatte, mit einer Dosieröffnung zwischen der Bodenplatte und der Frontwand oder zwischen der Rück- und der Frontwand, in Form einer kontinuierlichen Schicht auf einen Träger afgebracht wird, welche Schicht verdichtet und ausgehärtet wird.

Ein solches Verfahren ist aus der amerikanischen Patentanmeldung 2.592.518 bekannt. Das Verfahren wird zum Herstellen von Wellenplatten und Flachplatten aus Asbestzement angewandt.

Für harzgebundene anorganische Füllstoffe ist dieses Verfahren nicht anwendbar. Deren Dosierung ist soviel schwieriger, dass sich mit dem Verfahren keine kontinuierliche Schicht aus diesem Material bilden lässt. Dabei ist die erhaltene Fläche der Platte nicht glatt.

Zweck der Erfindung ist es, diese Nachteile auszugleichen und Flachplatten aus härtbarem Material herzustellen, indem sehr gleichmässig kontinuierlich eine Schicht aus ihm auf einen Träger aufgebracht wird, wobei eine glatte Platte erhalten werden kann.

Es ist von grosser Bedeutung, dass durch die Dosiervorrichtung ohne unerwünschte Unterbrechungen eine konstante Materialmenge sehr gleichmässig auf den Träger dosiert wird.

Ein weiterer Zweck der Erfindung ist ein Verfahren zum Herstellen von Platten, die die Nachteile der oft eingesetzten Gipskartonplatten nicht besitzen. Bekanntlicht sind Gipskartonplatten anfällig für Beschädigungen, das heisst, das sie eine beschränkte Schlagzähigkeit und Oberflächenhärte aufweisen und ausserdem für Feuchte empfindlich sind. Bei Verwendung in grossen Flächen sind sie aus kleineren Einheiten afzubauen, wodurch Nähte entstehen.

Die Erfindung ermöglicht es nunmehr, auf einfache und kontinuierliche Weise ein steiniges Produkt herzustellen. Die Verwendung zementartiger Materialien bei diesem Verfahren hat den Natchteil, dass ihre Aushärtung verhältnismassig viel Zeit erfordert.

Erfindungsgemäss wird dies dadurch erreicht, dass das härtbare Material aus anorganischem, harzgebundenem Füllstoff besteht und dass die Frontwand der Dosiervorrichtung, die Wand, die der auf den Träger aufgebrachten Schicht aus diesem härtbaren Material am nächsten ist, auf und ab bewegt, wonach die Schicht durch einen sich auf und ab bewegenden Stempel verdichtet und egalisiert wird.

Aus der niederländischen Patentanmeldung 7313830 ist bekannt, Formkörper aus anorganischem, harzgebundenem Rohstoff herzustellen. Das beschriebene Herstellungsverfahren ist nichtkontinuierlich und umständlich. Ferner sind die Abmessungen der Produkte durch die eingesetzten Formen völlig festgelegt.

Unter kontinuierlicher Schicht ist eine Schicht zu verstehen, deren Breite und Stärke, jedoch nicht die Länge bestimmt sind.

Das Verdichten der auf den bewegenden Träger aufgebrachten Schicht aus anorganischem Füllstoff und Harz ist notwendig, um ein kompaktes Ganzes ohne Lufteinschlüsse zu bekommen. Sollte nicht verdichtet werden, so wäre die mechanische Festigkeit der fertigen Platten unzulässig niedrig. Ausserdem würden an den Sichtflächen der Platten Unebenheiten entstanden. Dies ist unerwünscht und sollte demnach vermieden werden.

Man hat nunmehr gefunden, dass durch die sich auf und ab bewegende Frontwand eine kontinuierliche, sehr gleichmässige Dosierung des Materials auf den sich bewegenden Träger stattfindet.

Vorzugsweise ist der Stempel zum Verdichten der gebildeten Schicht unmittelbar an der sich auf und ab bewegenden Frontwand angeordnet und mit ihr verbunden, wodurch das auf den Träger dosierte Material sofort verdichtet und egalisiert wird. Diese Ausführung weist den Vorzug auf, dass eine Platte mit besondere guten mechanischen Eigenschaften und sehr glatter Fläche anfällt. Ein zusätzlicher Vorteil ist, dass nur ein einziger Antrieb zum Auf- und Abbewegen der Frontwand und des Stempels ausreicht. Die Stempelfläche ist senkrecht zur Wand in Richtung der und parallel zu der sich fortbewegenden Schicht angebracht. Vorzugsweise bilden die Frontwand und der Stempel ein Ganzes und haben im Querschnitt im wesentlichen eine L-Form, wobei das lange Bein die Wand und das kurze Bein die Stempelfläche bilden.

Der Stempel erfüllt mehrere Funktionen gleichzeitig, und zwar das Verdichten, Egalisieren und Glätten der Schicht. Dazu besteht er aus einer waagerechten die Egalisierzone bildenden Fläche und einem zwischen

zwischen dieser Fläche und der Frontwand nach oben verlaufenden die Verdichtungszone bildenden Übergang. Vorzugsweise verläuft der Übergang von der waagerechten Stempelflache zur Frontwand allmählich, worunter zu verstehen ist, dass der Übergang flach, gebogen oder stufenweise verlaufen kann.

Wird der Übergang durch eine als Verdichtungszone dienende Fläche gebildet, so schneidet die Fläche den Winkel zwischen Frontwand und Egalisierfläche ab. Dieser Winkel beträgt vorzugsweise maximal 30° und insbesondere 3-25°.

Das kurze Bein der L-Form, die die Stempelfläche bildet, verläuft an der von der Frontwand abgewendeten Längsseite über einen Bogen nach oben, um zu vermeiden, dass ein Auf- und Abbewegen des Stempels scharfe Eindrücke beim Übergang vom einen zum anderen Eindruck auf der verdichteten Schicht aus anorganischem Füllstoff und Harz zurückbleiben, die auch nach dem Aushärten sichtbar sind und sogar zu Rissen in der Fertigen Platte führen können. Der genannte nach oben verlaufende Bogen sorgt immer für eine glatte Fläche der verdichteten Schicht ohne sichtbare Eindrücke beim Übergang vom einen zum anderen Eindruck.

Der Hub des sich auf und ab bewegenden Stempels liegt vorzugsweise zwischen 1 und 10 mm. Wenn die Frontwand und der Stempel ein Ganzes bilden, bedeutet dies, dass der Hub der Frontwand dem des Stempels gleich ist. Die Hubzahl ist vorzugsweise 40-120 in der Minute.

In der Dosiervorrichtung lässt sich ein Schieber anbringen, mit dem die Dosieröffnung für eine gewisse Zeit geschlossen werden kann. In dieser Zeit findet keine Dosierung statt. Ein besonderer Vorteil der in Frage stehenden Erfindung ist, dass es möglich ist, durch Anbringen mehrerer Schieber, die eine Zeitlang das Hinausströmen von Material stellenweise vermeiden, Aussparungen in der Platte anzuordnen. Dies kann durch eine programmierte Bedienung der Schieber geschehen. Der Vorzug ist, dass sich eine Bearbeitung der gefertigten Platte erübrigt und dass Materialverlust vermieden wird.

Vom Standpunkt der Festigkeit und der Ästhetik kann es erwünscht sein, dass die fertige Platte auf einer Seite mit Stehrippen versehen wird. Dazu besitzt die Egalisierfläche des Stempels in der Fortbewegungsrichtung der Schicht angeordnete Rillen.

Wie bereits erwähnt, werden nach dem erfindungsgemässen Verfahren Platten aus anorganischem, harzgebundenem Füllstoff hergestellt.

Als anorganischer Füllstoff können teilchenförmige, mineralische und keramische Materialien verwendet werden, wie Flugasche, gemahlene Schlacken, gemahlener Kalkstein, und gemahlenes keramisches Material, wie Ziegelsteine usw. Als Harz wird vorzugsweise ein thermohärtender Harz eingesetzt, und zwar ungesättigte Polyester, Epoxydharze, Harnstofformaldehyd, Phenolformaldehyd, Melamin usw.

Als anorganischer Füllstoff kan zum Beispiel Quartzsand mit einem mittleren Korndurchmesser von 250 μ dienen, der sich mit einer etwa 50 prozentigen wässrigen Phenolformaldehydlösung bis zu einer Menge von 4 bis 6 Gew.-% Phenolharz, auf das Gewicht des Sands berechnet, vermischen lässt. Für weitere Einzelheiten über die Zusammensetzung sei hier auf die niederländische Patentanmeldung 7313830 verwiesen.

Die Erfindung bezieht sich auch auf eine Vorrichtung zum Durchführen des erfindungsgemässen Verfahrens, bestehend aus:

a) einer aus zwei Seitenwänden, einer Rückwand, einer Frontwand und etwaigenfalls einer Bodenplatte aufgebauten Dosiervorrichtung, deren Frontwand sich auf und ab bewegt;

b) einem senkrecht zur Frontwand an deren Unterseite angebrachten Stempel, der aus einer durch eine glatte Fläche gebildeten Egalisierzone und einer durch einen allmählichen Übergang von der Egalisierzone zur Frontwand gebildeten Verdichtungszone besteht;

c) einem Träger, auf den das Gemisch aus Füllmaterial und Harz in Form einer Schicht dosiert und durch den Stempel verdichtet und egalisiert wird und der Mittel zum kontinuierlichen Fortbewegen der Schicht besitzt.

Eine besondere Ausführung der Vorrichtung enthält Schieber, mit denen die Dosierung stellenweise zeitweise unterbrochen werden kann.

Die Erfindung wird anhand einer Zeichnung verdeutlicht werden. In ihr ist:

Fig. 1    ein Querschnitt einer Vorrichtung zum Herstellen einer kontinuierlichen Schicht aus mineralischem Füllstoff und Harz auf einem sich bewegenden Träger und

Fig. 2    eine geänderte Ausführung eines Stempels zum Verdichten der auf den Träger aufgebrachten Schicht.

Mit 1 ist die Dosiervorrichtung dargestellt, die aus zwei Seitenwänden 2 und 3, einer Rückwand 4, einer Frontwand 5 und einer Bodenplatte 6 besteht. In ihr befindet sich ein Gemisch aus mineralischem Füllstoff und Harz, das durch die Öffnung 7 auf den sich bewegenden Träger dosiert wird.

Dient die Rückwand 4 zugleich als Bodenplatte, so ist jene angeordnet, wie gestrichelt mit 4a angegeben. Die Frontwand 5 ist so mit einer Stange 9 mit einem nichtdargestellten Antrieb verbunden, dass die Frontwand kontinuierlich auf und ab bewegt wird. Mit Hilfe der Wand 5 wird eine sehr gleichmässige, konstante Dosierung des Gemisches aus der Dosiervorrichtung auf den Träger 8 erhalten. Dieser kann ein sich bewegender Träger sein, zum Beispiel ein Bandförderer, oder ein kettengetriebener Plattenförderer.

Das in Form einer Schicht 11 auf den Träger 8 dosierte Gemisch aus Füllstof und Harz wird in Richtung des Pfeils 10 gefördert. Die Frontwand 5 ist an der Unterseite parallel zur Richtung der Schicht 11 derart gebogen, dass sie im Querschnitt eine L-Form hat, wobei das lange Bein die Frontwand 5 und das kurze Bein einen Stempel 12 bilden. Wie die Zeichnung zeigt, besteht die Stempelfläche aus zwei Teilen, und zwar der waagerechten Fläche 13 und der nach oben verlaufenden Fläche 14, die die Verbindung zwischen dem flachen Teil 13 und der Frontwand 5 bildet. Durch die auf und ab gehende Bewegung der Frontwand 5 wird das auf den Träger dosierte Gemisch aus Füllstoff und Harz durch die Fläche 14 des Stempels sofort verdichtet und dann durch die Fläche 13 egalisiert. Um zu vermeiden, dass die Fläche 13 auf der verdichteten Schicht 11 scharfe Eindrücke zurücklässt, ist das freie Ende dieser Fläche durch einen Bogen 14 umgebogen. Durch diese Stempelausführung bekommt man eine verdichtete Schicht 11 aus mineralischem Füllstoff und Harz ohne Lufteinschlüsse und mit glatter Oberfläche. Durch den Träger 8 wird eine glatte Oberfläche der anderen Längsfläche der Schicht 11 erhalten. Die Schicht 11 wird kontinuierlich gebildet und kann nach Verdichten und Egalisieren in Einzelstücke der gewünschten Abmessungen verteilt werden, die durch Erhitzen oder auf andere Weise ausgehärtet werden.

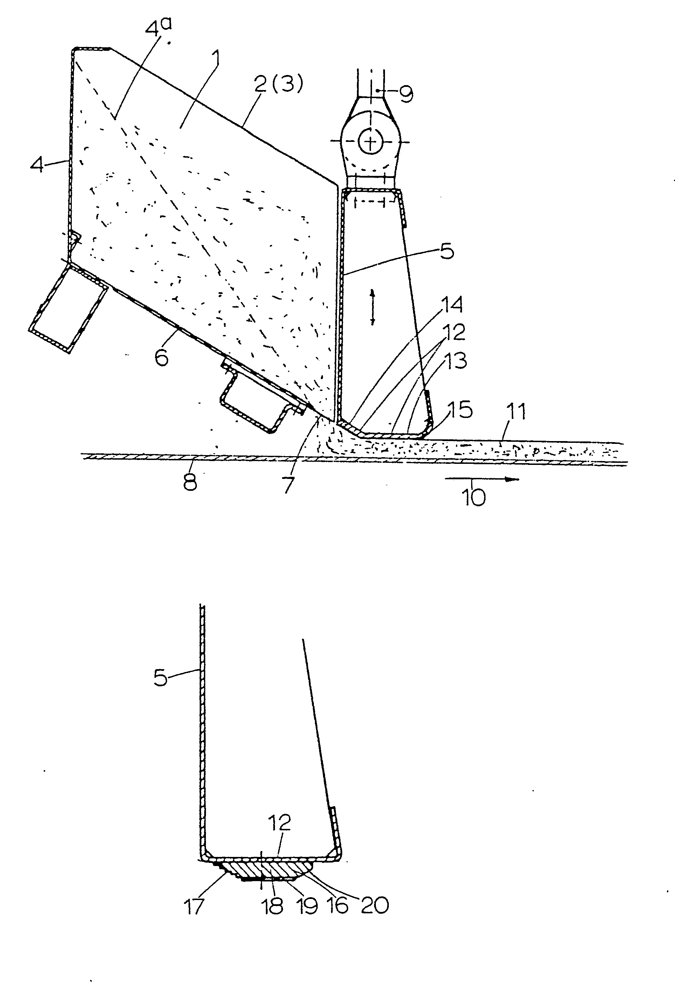

Das Gemisch aus Füllstoff (Sand) und Harz verursacht auf die Dauer einen Verschleiss am Stempel. Um zu vermeiden, dass dann die ganze Frontwand 5 ersetzt werden muss, ist, wie es die Fig. 2 zeigt, der Stempel 12 mit einem Ansatzstück 16 versehen, das durch Schrauben am Stempel 12 befestigt ist. Dieses Stück besteht aus einem gestuften Teil 17, der als Verdichtungszone dient, und einem flachen Teil 18, der als Egalisierzone dient. Der flache Teil 18 läuft über eine neigende Fläche 20 nach oben, wobei der Übergang zwischen dem flachen Teil 18 und der schrägen Fläche 20 abgerundet ist, um scharfe Eindrücke in der Schicht 11 zu vermeiden. In der Dosiervorrichtung kann ein Schieber (nicht dargestellt) angebracht sein, mit dem die Dosieröffnung 7 eine Zeitlang geschlossen werden kann. In dieser Zeit findet keine Dosierung auf den Träger 8 statt. Werden mehrere Schieber angeordnet, so ist es möglich, selektiv Öffnungen in der Platte vorzusehen.

Wenn man Platten wünscht, die auf einer Seite mit Rippen versehen sind, so erhält der Stempel 16 in der Längsrichtung der gebildeten Schicht angebrachte Rillen 19. Die Rippen können vom Standpunkt der Festigkeit und der Ästhetik erwünscht sein.

PATENTANSPRÜCHE

1. Verfahren zum Herstellen flacher Platten aus härtbarem Material, indem es mit Hilfe einer Dosiervorrichtung, die aus zwei Seitenwänden, einer Rückwand, einer Frontwand und etwaigenfalls einer Bodenplatte, besteht, die einen Dosierschlitz frei lassen, in Form einer kontinuierlichen Schicht auf einen Träger aufgebracht wird, welche Schicht verdichtet und ausgehärtet wird, dadurch gekennzeichnet, dass das härtbare Material aus anorganischem, harzgebundenem Füllstoff besteht und dass sich die Frontwand, die der auf den Träger aufgebrachten Schicht am nächsten ist, auf und ab bewegt, wonach die Schicht auf dem Träger durch einen sich auf und ab bewegenden Stempel verdichtet und egalisiert wird.

2. Verfahren nach Anspruch 1, dadurch gekennzeichnet, dass die sich auf und ab bewegende Frontwand zum Verdichten der gebildeten Schicht mit dem Stempel mit einer Stempelfläche verbunden ist, die senkrecht zu dieser Wand in Richtung der und parallel zu der sich fortbewegenden Schicht angebracht is.

3. Verfahren nach Anspruch 2, dadurch gekennzeichnet, dass die Wand und die Stempelfläche ein Ganzes bilden und im Querschnitt im wesentlichen eine L-Form haben, wobei das lange Bein die Wand und das kurze die Stempelfläche bilden.

4. Verfahren nach den Ansprüchen 1-3, dadurch gekennzeichnet, dass das kurze Bein aus einer waagerechten Fläche besteht, die eine Egalisierzone bildet, und einem zwischen der waagerechten Fläche und der Frontwand nach oben verlaufenden Übergang, der eine Verdichtungszone bildet.

5. Verfahren nach Anspruch 4, dadurch gekennzeichnet, dass der als Verdichtungszone dienende Übergang allmählich verläuft.

6. Verfahren nach Anspruch 4, dadurch gekennzeichnet, dass der Übergang durch eine als Verdichtungszone dienende Fläche gebildet wird, die den Winkel zwischen Wand und Egalisierfläche abschneidet.

7. Verfahren nach Anspruch 6, dadurch gekennzeichnet, dass die Übergangsfläche mit dem Träger einen Winkel von maximal 30° macht.

8. Verfahren nach Anspruch 6, dadurch gekennzeichnet, dass die Übergangsfläche mit dem Träger einen Winkel von 3-25° macht.

9. Verfahren nach Anspruch 4, dadurch gekennzeichnet, dass die Egalisierfläche an der von der Wand abgewendeten Längsseite mit einem Bogen nach oben verläuft.

10. Verfahren nach Anspruch 2, dadurch gekennzeichnet, dass der Hub der Wand und des Stempels, die sich beide auf und ab bewegen, zwischen 1 und 10 mm liegt.

11. Verfahren nach Anspruch 2, dadurch gekennzeichnet, dass die Egaliserfläche mit in Richtung der Fortbewegung der Schicht angeordneten Rillen versehen ist.

12. Verfahren nach den Ansprüchen 1 bis 11, dadurch gekennzeichnet, dass der Dosierschlitz mit Schiebern stellenweise geschlossen werden kann.

13. Vorrichtung zum Herstellen einer verdichteten Schicht aus anorganischem Füllstoff und Harz, bestehend aus:

a) einer aus zwei Seitenwänden, einer Rückwand, einer Frontwand und etwaigenfalls einer Bodenplatte aufgebauten Dosiervorrichtung, deren Frontwand sich auf und ab bewegt;

b) einem senkrecht zur Frontwand an deren Unterseite angebrachten Stempel, der aus einer durch eine glatte Fläche gebildeten Egalisierzone und einer durch einen allmählichen Übergang von der Egalisierzone zur Frontwand gebildeten Verdichtungszone besteht;

c) einem Träger, auf dem das Gemisch aus Füllmaterial und Harz in Form einer Schicht dosiert wird, die durch den Stempel verdichtet und egalisiert wird, welcher Träger mit Mitteln zum kontinuierlichen Fortbewegen der Schicht ausgerüstet ist.

14. Vorrichtung nach Anspruch 13, dadurch gekennzeichnet, dass die Dosiervorrichtung auch Schieber besitzt, die die Dosierung stellenweise unterbrechen können.

4<sup>a</sup>

4

2(3)

1

9

5

14

12

13

15

11

6

8

7

10

5

12

17   18  19  16   20

# EUROPÄISCHER RECHERCHENBERICHT

0054334

Europäisches
Patentamt

Nummer der Anmeldung

EP 81 20 1360

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 1 503 031 (INSEC) <br><br> * Seite 3, linke Spalte, Absatz 1 bis rechte Spalte, Absatz 1; Ansprüche; Figur 2 * <br> --- | 1-10, 13 |
| X | FR - A - 1 248 213 (B.A.S.F.) <br><br> * insgesamt * <br> --- | 1-4, 10,11, 13 |
| X | FR - A - 2 416 777 (SAINT-GOBAIN) <br><br> * Seite 6, Zeile 38 bis Seite 7, Zeile 14; Ansprüche 8,9; Figur 6 * <br> --- | 1-8, 13 |
| Y | US - A - 2 004 936 (R. DORN) <br><br> * insgesamt * <br> --- | 1,13 |
| Y | FR - A - 352 622 (P. THOMANN) <br><br> * Seite 2; Figuren * <br> --- | 1,13 |
| X | FR - A - 2 144 520 (SEFAPLAC) <br><br> * insgesamt * <br><br> ---------- | 1-3, 13 |

### KLASSIFIKATION DER ANMELDUNG (Int. Cl.³)

B 29 J 5/00
B 28 B 5/02

### RECHERCHIERTE SACHGEBIETE (Int Cl.³)

B 29 J 1/00
B 28 B 5/00

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22.03.1982 | LABEEUW |

EPA form 1503.1 06.78